# EUROPÄISCHE PATENTSCHRIFT

(11) **EP 1 293 365 B1**
(45) Veröffentlichungstag und Bekanntmachung des Hinweises auf die Patenterteilung: **19.05.2004**
(21) Anmeldenummer: 02017018.9
(22) Anmeldetag: 27.07.2002
(51) Int. Cl.: B60G 11/12, F16F 1/38

(54) **Elastisches Federaugenlager zur Lagerung eines Federauges einer Blattfeder an einem Fahrzeug**
Elastic spring-eye bearing for supporting a leaf spring spring-eye on a vehicle
Palier d'oeillet de ressort élastique pour supporter l'oeillet d'un ressort à lame sur un véhicule

(30) Priorität: 14.09.2001 DE 10145343
(43) Veröffentlichungstag der Anmeldung: 19.03.2003
(73) Patentinhaber: Jörn ELZA GmbH, 71336 Waiblingen (DE)
(72) Erfinder: Zawadzki, Bernd, 71397 Leutenbach (DE); Mursinsky, Jörg, 71364 Winnenden (DE); Stummer, Josef, 85716 Unterschleissheim (DE); Schwaiger, Franz, 80997 München (DE); Kraus, Alfons, 83624 Otterfing (DE)
(74) Vertreter: Neubauer, Hans-Jürgen, Dipl.-Phys.

(56) Entgegenhaltungen:
- EP-A- 0 493 731
- EP-A- 0 955 482
- DE-B- 1 109 045
- GB-A- 527 780
- GB-A- 1 000 691
- PATENT ABSTRACTS OF JAPAN vol. 2000, no. 21, 3. August 2001 (2001-08-03) & JP 2001 105819 A (TOPY IND LTD), 17. April 2001 (2001-04-17)

## Beschreibung

Die Erfindung betrifft ein elastisches Federaugenlager zur Lagerung eines Federauges einer Blattfeder an einem Fahrzeug nach dem Oberbegriff des Anspruchs 1.

Ein gattungsgemäßes elastisches Federaugenlager (EP 0 493 731 B1) besteht aus einem Gummi-Metallteil mit einem inneren zylindrischen Metallteil welches mit einem Rahmenteil des Fahrzeugs verbindbar ist und mit einem auf das innere Metallteil festhaftend aufvulkanisierten rotationssymmetrisch umlaufenden Gummikörper mit beidseitigen Stirnseiten, wobei das Gummi-Metallteil bei der Montage unter Aufbringung einer Gummivorspannung in das Federauge einpressbar ist. Das innere Metallteil überragt mit Metallteilüberständen zu beiden Seiten den Gummikörper. Auf diese Metallteilüberstände sind jeweils Stützringe aufgesteckt und axial fixiert, welche im montierten eingepressten Zustand zur axialen Abstützung des Gummikörpers an den jeweils zugeordneten Stirnseiten des Gummikörpers mit Ringanlageflächen anliegen. Das Federauge übergreift mit seinen stirnseitigen Federaugenenden die Stützringe zumindest teilweise dergestalt, dass zwischen der Innenfläche der Federaugenenden und der Außenumfangsfläche der Stützringe jeweils ein umlaufender Anschlag-Ringspalt verbleibt, der bei starker radialer Belastung und/oder kardanischer Belastung beim Einfedern überwunden wird, so dass wenigstens ein Federaugenende am zugeordneten Stützring auf Block geht wobei der Stützring als radialer Anschlag wirkt.

Das Gummi-Metallteil dieses bekannten gattungsgemäßen Federaugenlagers ist zudem als Schlitzbuchse ausgebildet mit einem äußeren, zylindrischen Metallrohr das einen axialen Schlitz aufweist. Der Gummikörper ist zwischen dem inneren Metallteil und dem äußeren geschlitzten Metallrohr festhaftend einvulkanisiert, wobei sich der axiale Schlitz des äußeren Metallrohrs zudem keilförmig in den Gummikörper hinein erstreckt. Unter radialer Vorspannung wird der Schlitz beim Einpressen in das Federauge geschlossen. Beim Einpressen eines solchen axial geschlitzten Gummi-Metallteils in ein Federauge wird der Durchmesser des Gummi-Metallteils um ca. 0,8 mm zur Aufbringung einer definierten Gummivorspannung und zum Schließen des axialen Spalts des äußeren Metallrohrs verringert. Dabei wird der Gummi des Gummikörpers axial stirnseitig nach außen gegen die Stützringe zur Anlage mit relativ genauer vorbestimmter Auswölbung verdrängt. Die Anlagegegebenheiten zwischen den Gummikörperstirnseiten und den Stützringen sind somit weitgehend definiert vorgebbar. Um solche definierten Verhältnisse bei der relativ geringen Durchmesserverkleinerung von ca. 0,8 mm des Gummi-Metallteils beim Einpressen zu erhalten ist es erforderlich entsprechend genaue Gegebenheiten im Federaugendurchmesser zur Verfügung zu stellen, die nur durch eine entsprechende Vorbearbeitung beispielsweise durch Ausbohren oder Ausdrehen zu erhalten sind. Bei unbearbeiteten Federaugen liegen dagegen Durchmessertoleranzen von ca. 0,8 mm vor. Eine Kombination unbearbeiteter Federaugen mit den bekannten gattungsgemäßen Gummi-Metallteilen ist daher in der Serienproduktion wegen zu ungenauen Zuordnungen nicht möglich. Zudem ist die Vorbearbeitung der Federaugen aus gehärtetem Material aufwendig und kostenintensiv.

Bei einem weiter bekannten Federaugenlager (DE 198 20 773 A1 ) ist dagegen ein zylindrischer umlaufender Gummikörper ohne äußeres Metallrohr und ohne axialen Schlitz verwendet, so dass die Umfangsfläche des Gummikörpers beim Einpressen in ein Federauge unmittelbar an dessen Innenfläche anliegt. Der Gummikörper kann dabei größere Toleranzen des Federauges aufnehmen, so dass hier der Einbau in unbearbeitete Federaugenlager möglich ist. Der Gummikörper weist zudem jeweils stirnseitig umlaufende Wülste auf, die im eingepressten und montierten Zustand jeweils zwischen den Stirnseiten des Federauges und den zugeordneten Wangen eines rahmenseitigen Lagerbocks liegen und eine axiale Abstützfunktion bewirken. Stützringe wie im eingangs angegebenen gattungsgemäßen Federaugenlager sind hier nicht vorgesehen. Ebenso ist hier kein radialer Anschlag zwischen (nicht vorhandenen) stirnseitigen Stützringen und diese übergreifende Federaugenenden vorgesehen. Falls hier Stützringe anstelle der stirnseitigen Ringwülste verwendet würden, bestünde das Problem, dass bei jeweils in der Gestalt gleichen Gummi-Metallteilen und bei unbearbeiteten Federaugen durch deren Durchmessertoleranzen unterschiedliche stirnseitige Auswölbungen des beim Vorspannen verdrängten Gummis erzeugt würden. Bei den unbearbeiteten Federaugen mit den größten Durchmessern wäre es jedenfalls erforderlich, dass der stirnseitig beim Vorspannen verdrängte Gummi noch an den Stützringen (im nicht belasteten Zustand) anliegt. Dies hätte zur Folge, dass bei den Federaugenlagern mit toleranzbedingt kleinen Durchmessern die stirnseitige Gummiverdrängung so groß wäre, dass Gummi in den umlaufenden Anschlag-Ringspalt hinein verdrängt würde und dort schnell zerstört würde. Dies würde zu einem schnellen Verschleiß und zu einer nicht tolerierbaren Verringerung der Standzeiten eines solchen Lagers führen. Zudem würde eine solche Zerstörung von Gummivolumen im Anschlag-Ringspalt insgesamt die Federkonstante des Lagers in unzulässiger Weise reduzieren.

Aufgabe der Erfindung ist es demgegenüber ein gattungsgemäßes Federaugenlager mit Stützringen so weiterzubilden, dass dazu unbearbeitete Federaugen verwendbar sind.

Diese Aufgabe wird mit den kennzeichnenden Merkmalen des Anspruchs 1 gelöst.

Gemäß Anspruch 1 weist der Gummikörper eine freie Umfangsfläche auf, d. h. es ist kein äußeres aufvulkanisiertes axialgeschlitztes Metallrohr vorhanden. Der Gummikörper ist in ein unbearbeitetes Federauge einpressbar, wobei diese Umfangsfläche direkt im Federauge an dessen Innenfläche anliegt. Zudem weisen die Ringanlageflächen der Stützringe wenigstens einen Gummiaufnahmeraum als Einbuchtung auf.

Vorteilhaft kann bei einer solchen Ausführung der jeweilige Gummikörper die Durchmessertoleranzen der unbearbeiteten Federaugen einfach aufnehmen. Bei toleranzbedingt größeren Federaugendurchmessern wird beim Einpressen des Gummimetallteils der Gummikörper jedoch mit einer geringeren stirnseitigen Auswölbung vorgespannt. Die Dimensionierung ist dabei so auszuführen, dass für diesen Fall (im nicht fahrbetriebsmäßigen Belastungszustand) noch eine Anlage an der Ringanlagefläche der Stützringe vorliegt.

Bei einem toleranzbedingt kleinen Federaugendurchmesser wird dagegen beim Einpressen der Gummi des jeweiligen Gummikörpers mit stirnseitig großen Auswölbungen vorgespannt. Damit in diesem Fall kein Gummi in den Anschlag-Ringspalt hineinverdrängt und dort betriebsmäßig zerstört wird, weisen die Ringanlageflächen der Stützringe dafür wenigstens einen Gummiaufnahmeraum als Einbuchtung auf. Aufgrund dieser Maßnahme können vorteilhaft gleichgestaltete Gummi-Metallteile mit Gummikörpern gleichen Durchmessers in Verbindung mit unbearbeiteten Federaugen mit relativ großen Durchmessertoleranzen eingesetzt werden.

Solche Einbuchtungen können beispielsweise an den Ringanlageflächen versetzte Einwölbungen sein. Gleichmäßige Verdrängungsverhältnisse in Verbindung mit einfacher Herstellung werden jedoch vorteilhaft erreicht, wenn der Gummiaufnahmeraum gemäß Anspruch 2 als wenigstens eine ringförmig umlaufende Gummiaufnahmenut vorgesehen ist. Die Gummiaufnahmenut ist dabei so zu dimensionieren, dass auch bei toleranzbedingt sehr kleinen Federaugendurchmessern so viel axial verdrängter Gummi in der Gummiaufnahmenut aufgenommen wird, dass kein Gummi in den Anschlag-Ringspalt hineinverdrängt wird.

In einer besonders bevorzugten Ausführungsform nach Anspruch 3 sind eine radial weiter außenliegende ringförmige Gummiaufnahmenut und ein radial weiter innenliegender an der Ringanlagefläche ringförmig vorspringender Gummistützsteg vorgesehen. Bei einer solchen Kombination mit einer Gummiaufnahmenut und einem Gummistützsteg wird vorteilhaft erreicht, dass bei toleranzbedingt sehr großen Federaugendurchmessern der dann bei der Vorspannung stirnseitig nur wenig verdrängte und ausgewölbte Gummi noch am vorspringenden Gummistützsteg anliegt.

Um bei Lagerbelastungen einen stirnseitigen Gummiabrieb und ungünstig große Gummiquetschungen zu reduzieren wird mit Anspruch 4 vorgeschlagen, dass Einbuchtungen und/oder Gummiaufnahmenuten und/oder Gummistützstege kantenlos mit abgerundeten Gummianschlageflächen und abgerundeten Übergängen ausgeführt sind.

In an sich bekannter Weise können gemäß Anspruch 5 die Stützringe im Herstellzustand auf die Metallteilüberstände des inneren Metallteils lose aufgesteckt sein und durch seitliche Wangen eines rahmenseitigen Lagerbocks im fertig montierten Zustand axial fixiert sein. In einer verbesserten ebenfalls an sich bekannten Ausführungsform sind nach Anspruch 6 die Stützringe auf die Metallteilüberstände des inneren Metallteils aufgepresst und dadurch bereits im Herstellzustand unverlierbar axial fixiert. Dabei verbleibt im Herstellzustand zwischen den Stützringen und den zugeordneten Stirnseiten des Gummikörpers jeweils ein Abstand als Freiraum der so groß dimensioniert ist, dass im eingepressten Einbauzustand dieser Freiraum durch die stirnseitige Gummiauswölbung zumindest so weit ausgefüllt ist, dass der Gummikörper mit nur relativ geringer Vorspannung axial an den Stützringen anliegt. Die Metallteilüberstände können metallisch blank sein. Fertigungstechnisch bedingt kann auch auf den Metallteilüberständen im Aufsteckbereich der Stützringe eine dünne Gummihaut vorhanden sein.

Vorzugsweise werden nach Anspruch 7 die Stützringe als Kunststoffringe ausgeführt, die einfach durch Aufweitung auf das innere Metallteil aufpressbar sind. In an sich bekannter Weise können jedoch auch Metallringe verwendet werden.

Gemäß Anspruch 8 hat in an sich bekannter Weise der zylindrische Gummikörper im Herstellzustand zur Aufbringung einer geeigneten Gummivorspannung einen Außendurchmesser der größer als der Innendurchmesser des Federauges ist und radial konisch verlaufende Gummikörperstirnseiten. Zudem ist für eine Ausbildung des Anschlag-Ringspalts der Innendurchmesser des Federauges immer größer als der Außendurchmesser der Stützringe. Zweckmäßig wird zudem nach Anspruch 9 der Gummikörper durch eine axial mittlere umlaufende Gumminut in zwei Teilbereiche geteilt, wodurch beim Einpressen in diesem Bereich eine gleichmäßige Gummiverdrängung erreicht wird, durch die die Gumminut wieder schließbar ist.

In an sich bekannter Weise können zudem im Gummikörper eine oder mehrere metallische Zwischenlagen z. B. als gerollte Bleche einvulkanisiert sein.

Weiter ist es nach Anspruch 10 zweckmäßig das innere Metallteil als Metallrohr auszuführen welches mittels einer durchgesteckten Spannschraube zwischen Wangen eines rahmenseitigen Lagerbocks unverdrehbar einspannbar ist, wobei die Stützringe bündig mit den Stirnseiten des Metallrohrs abschließen. Anhand einer Zeichnung wird ein Ausführungsbeispiel der Erfindung näher erläutert.

Es zeigen:
- Fig.1: Längsschnitt durch ein elastisches Lager als Federaugenlagerung im fertig montierten Zustand
- Fig.2: vergrößerte Einzelheit X aus Fig.1
- Fig.3: vergrößerte Einzelheit Y aus Fig.1
- Fig.4: Gummi-Metallteil im nicht eingebauten Zustand mit Stützringen (Freischnitt des inneren Metallteils)
- Fig.5 und 5a: Schnitt durch einen Stützring mit vergrößerter Detaildarstellung

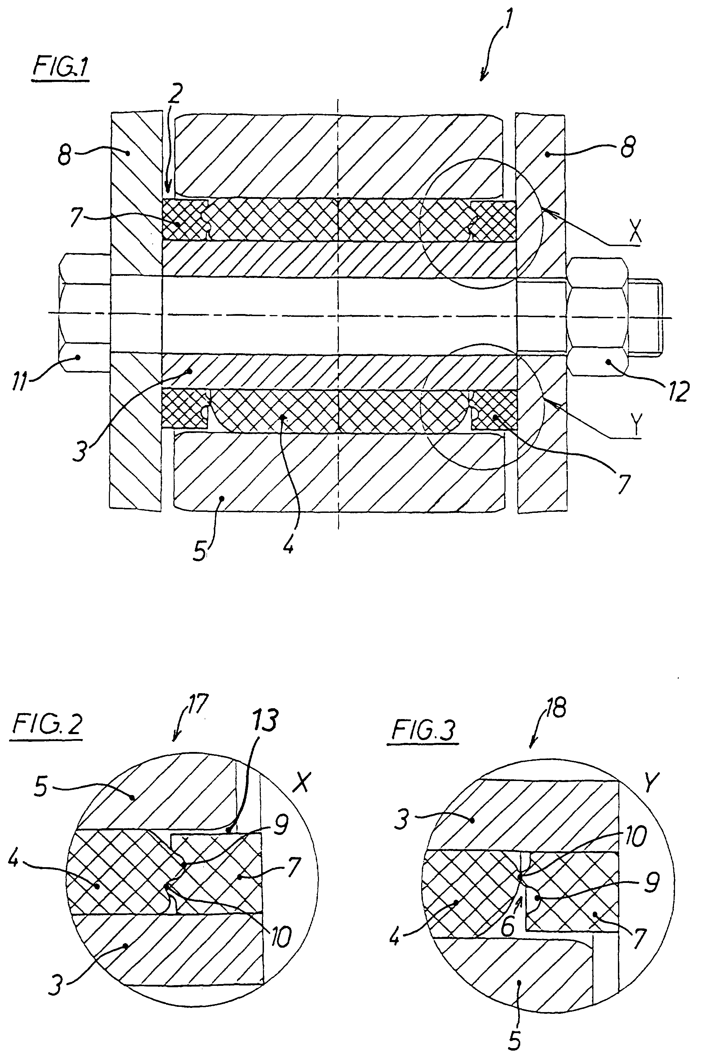

In Fig.1 ist eine Federaugenlagerung 1 dargestellt, mit einem Gummi-Metallteil 2, das aus einem inneren Metallteil 3 und einem darauf festhaftend vulkanisierten Gummikörper 4 aufgebaut ist. Das Gummi-Metallteil 2 ist unter radialer Vorspannung in ein Federauge 5 eingepresst. Das in das Federauge 5 eingepresste Gummi-Metallteil 2 ist in einem rahmenseitigen Lagerbock 8 mittels einer Spannschraube 11 und einer Mutter 12 eingebaut. Die jeweilige, dem Gummikörper 4 zugewandte Ringanlagefläche 6 der beiden seitlichen Stützringe 7 ist mit einer ringförmig umlaufenden Gummiaufnahmenut 9 und einem ringförmig umlaufenden vorspringenden Gummistützsteg 10 ausgeführt.

Die Darstellung ist horizontal in zwei unterschiedliche Einbausituationen des Gummi-Metallteils 2 in das Federauge 5 unterteilt. In der oberen Hälfte ist der Kleinsteinbau 17 dargestellt, d.h. der Federaugeninnendurchmesser ist durch toleranzbedingte Abweichungen an der kleinstmöglichen Maßgrenze. Die Dimensionierung der beteiligten Bauteile ist so ausgelegt, dass der Gummikörper 4 im eingepressten Zustand in die ringförmig umlaufende Gummiaufnahmenut 9 gedrängt wird. In der unteren Hälfte der Darstellung ist der Größteinbau 18 gezeichnet. D.h. der Federaugeninnendurchmesser ist durch toleranzbedingte Abweichungen an der größtmöglichen Maßgrenze. Für diesen Fall kann ein gleichgestaltetes Gummi-Metallteil 2 wie für den Kleinsteinbau 17 verwendet werden, da dieses an dem ringförmig umlaufend vorspringenden Gummistützsteg 10 zur Anlage kommt und so die Funktion des gesamten Lagers sichergestellt ist.

In Fig.2 und Fig.3 sind die Einzelheiten X und Y der Fig.1 vergrößert dargestellt. Dabei ist nur jeweils der Gummikörper 4, das Federauge 5 und der Stützring 7 gezeichnet. An der Ringanlagefläche 6 sind die Gummiaufnahmenut 9 und der Gummistützsteg 10 zu erkennen. Dabei stellt Fig.2 die Situation des Kleinsteinbaus 17 und Fig.3 die Situation des Größteinbaus 18 im eingebauten, nicht fahrbetriebsmäßig belasteten Betriebszustand dar.

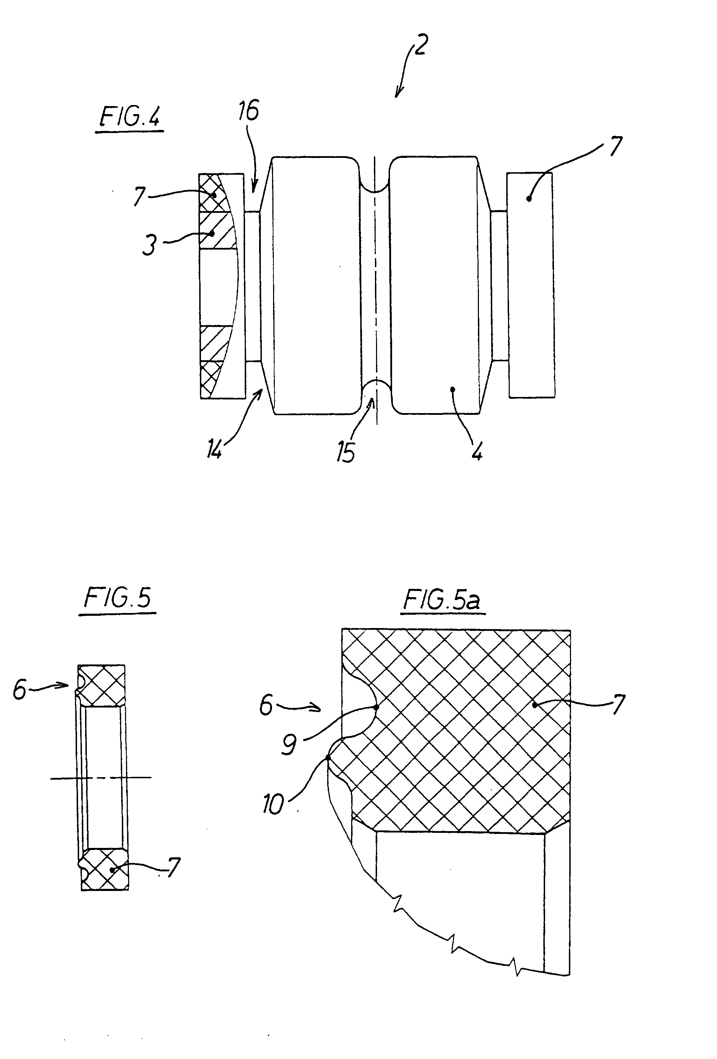

Fig.4 zeigt ein Gummi-Metallteil 2 mit aufgesteckten Stützringen 7 im nicht eingebauten Zustand. Dabei sind am Gummikörper 4 die radial-konisch verlaufenden Stirnseiten 14 und die axial mittig umlaufende Gumminut 15 zu erkennen. Die Freiräume 16 zwischen dem Gummikörper 4 und den beiden seitlichen Stützringen 7 werden beim Einpressvorgang in das Federauge 5 gefüllt und zugleich ergibt sich durch die Gesamtform des Gummikörpers 4 eine gleichmäßige Gummiverdrängung im eingebauten Zustand. Im seitlichen Freischnitt ist das innere Metallteil 3, auf das der Gummikörper 4 aufvulkanisiert ist, zu erkennen. Die Stützringe 7 können nur lose aufgesteckt sein, wobei sie dann durch den rahmenseitigen Lagerbock 8 gehalten werden, oder sie sind auf das innere Metallteil 3 unverlierbar aufgepresst.

Ein Schnitt durch einen Stützring 7 ist in Fig.5 dargestellt. Dabei sind die ringförmig umlaufende Gummiaufnahmenut 9 und der Gummistützsteg 10 zu erkennen. Fig.5a stellt eine Detailvergrößerung von Fig.5 dar.

Durch die oben beschriebene Ausführung der Stützringe 7 ist erfindungsgemäß sichergestellt, dass der Gummikörper auch bei einem Kleinsteinbau 17 und bei starker radialer Belastung und/oder kardanischer Belastung nicht in den Anschlag-Ringspalt 13 gedrängt wird, sondern von der Gummiaufnahmenut 9 aufgenommen wird. So kann eine teilweise Zerstörung des Gummikörpers 4 durch Quetschungen in dem Anschlag-Ringspalt 13 verhindert werden. Zusätzlich kann das Gummi-Metallteil 2 in ein unbearbeitetes Federauge 5 mit relativ großen Durchmessertoleranzen eingesetzt werden, da diese durch die Form der Ringanlagefläche 6 der Stützringe 7 kompensiert werden. Die Gummiaufnahmenut 9 und der Gummistützsteg 10 sind kantenlos mit abgerundeten Übergängen ausgeführt. Damit sind bei Lagerbelastungen ein geringer stirnseitiger Gummiabrieb und keine ungünstigen Gummiquetschungen zu erwarten.

## Patentansprüche

1. Elastisches Federaugenlager zur Lagerung eines Federauges einer Blattfeder an einem Fahrzeug, bestehend aus einem Gummi-Metallteil (2)
- mit einem inneren, zylindrischen Metallteil (3) welches mit einem Rahmenteil des Fahrzeugs verbindbar ist,
- mit einem auf das innere Metallteil (3) festhaftend auf vulkanisierten, rotationssymmetrisch umlaufenden Gummikörper (4) mit beidseitigen Stirnseiten (14), wobei das Gummi-Metallteil (2) bei der Montage unter Aufbringung einer Gummivorspannung in das Federauge (5) einpressbar ist,
- mit Metallteilüberständen, mit denen das innere Metallteil (3) zu beiden Seiten den Gummikörper (4) überragt,
- mit beidseitig auf die Metallteilüberstände aufgesteckten und axial fixierten Stützringen (7), die im montierten, eingepressten Zustand zur axialen Abstützung des Gummikörpers (4) an den jeweils zugeordneten Stirnseiten (14) des Gummikörpers (4) mit Ringanlageflächen (6) anliegen, wobei das Federauge (5) mit seinen stirnseitigen Federaugenenden die Stützringe (7) zumindest teilweise übergreift, dergestalt, dass zwischen der Innenfläche der Federaugenenden und der Außen-Umfangsfläche der Stützringe (7) jeweils ein umlaufender Anschlag-Ringspalt (13) verbleibt, der bei starker radialer Belastung und/oder kardanischer Belastung beim Einfedern überwunden wird und wenigstens ein Federaugenende am zugeordneten Stützring (7) auf Block geht, wobei der Stützring (7) als radialer Anschlag wirkt,
**dadurch gekennzeichnet,**
**dass** der Gummikörper (4) eine freie Umfangsfläche aufweist und in ein unbearbeitetes Federauge (5) einpressbar ist, wobei diese Umfangsfläche direkt im Federauge (5) anliegt,
**dass** die Ringanlageflächen (6) der Stützringe (7) wenigstens einen Gummiaufnahmeraum als Einbuchtung aufweisen.

2. Elastisches Federaugenlager nach Anspruch 1, **dadurch gekennzeichnet, dass** der Gummiaufnahmeraum wenigstens eine ringförmig umlaufende Gummiaufnahmenut (9) ist.

3. Elastisches Federaugenlager nach Anspruch 1 oder 2, **dadurch gekennzeichnet, dass** eine radial weiter außenliegende ringförmige Gummiaufnahmenut (9) und ein radial weiter innenliegender an der Ringanlagefläche (6) ringförmig vorspringender Gummistützsteg (10) vorgesehen sind.

4. Elastisches Federaugenlager nach einem der Ansprüche 1 bis 3, **dadurch gekennzeichnet, dass** Einbuchtungen und/oder Gummiaufnahmenuten (9) und/oder Gummistützstege (10) kantenlos mit abgerundeten Gummianlageflächen und abgerundeten Übergängen ausgeführt sind.

5. Elastisches Federaugenlager nach einem der Ansprüche 1 bis 4, **dadurch gekennzeichnet, dass** die Stützringe (7) im Herstellzustand auf das innere Metallteil (3) lose aufgesteckt sind und durch seitliche Wangen eines rahmenseitigen Lagerbocks (8) im fertig montierten Zustand axial fixiert sind.

6. Elastisches Federaugenlager nach einem der Ansprüche 1 bis 4, **dadurch gekennzeichnet, dass** die Stützringe (7) auf das innere Metallteil (3) aufgepresst und dadurch axial fixiert sind, dergestalt, dass im Herstellzustand zur Stirnseite (14) des zugeordneten Gummikörpers (4) ein Abstand als Freiraum (16) verbleibt, der so groß dimensioniert ist, dass im eingepressten Einbauzustand der Freiraum (16) durch die stirnseitige Gummiauswölbung zumindest so weit ausgefüllt ist, dass der Gummikörper (4) mit nur geringer Vorspannung axial an den Stützringen (7) anliegt.

7. Elastisches Federaugenlager nach einem der Ansprüche 1 bis 6, **dadurch gekennzeichnet, dass** die Stützringe (7) Kunststoffringe sind.

8. Elastisches Federaugenlager nach einem der Ansprüche 1 bis 7, **dadurch gekennzeichnet, dass** im Herstellzustand der zylindrischen Gummikörper (4) einen Außendurchmesser größer als der Innendurchmesser des Federauges (5) mit radial konisch verlaufenden Gummikörper-Stirnseiten (14) aufweist und der Innendurchmesser des Federauges (5) größer als der Außendurchmesser der Stützringe (7) ist.

9. Elastisches Federaugenlager nach Anspruch 8, **dadurch gekennzeichnet. dass** der Gummikörper (4) durch eine axial mittlere, umlaufende Gumminut (15) in zwei Teilbereiche geteilt ist.

10. Elastisches Federaugenlager nach einem der Ansprüche 1 bis 9, **dadurch gekennzeichnet, dass** das innere Metallteil (3) ein Metallrohr ist, welches mittels einer durchgesteckten Spannschraube (11) zwischen Wangen eines rahmenseitigen Lagerbocks (8) unverdrehbar einspannbar ist, wobei die Stützringe (7) bündig mit den Stirnseiten des Metallrohrs abschließen.

## Claims

1. Elastic spring eye bearing for supporting a spring eye of a leaf spring on a vehicle, comprising a rubber-metal part (2)
- having an inner, cylindrical metal part (3) which can be connected to a frame part of the vehicle,
- having a rubber body (4) which is vulcanized onto the inner metal part (3) in a firmly adhering manner, encircles it in a rotationally symmetrical manner and has end sides (14) on both sides, it being possible, during the assembly, for the rubber-metal part (2) to be pressed into the spring eye (5) with the application of a prestress to the rubber,
- having projecting lengths of the metal part, with which the inner metal part (3) protrudes over the rubber body (4) on both sides,
- having supporting rings (7) which are placed onto the projecting lengths of the metal part on both sides and are fixed axially and, in the fitted, pressed-in state, bear against the respectively assigned end sides (14) of the rubber body (4) with annular bearing surfaces (6) in order to axially support the rubber body (4), the spring eye (5) engaging at least partially, by means of its end-side spring eye ends, over the supporting rings (7) in such a manner that an encircling stop-type annular gap (13) remains in each case between the inner surface of the spring eye ends and the outer circumferential surface of the supporting rings (7), which gap is overcome when there is a severe radial load and/or cardanic load when experiencing compression, and at least one spring eye end on the associated supporting ring (7) forms a solid block, in which case the supporting ring (7) acts as a radial stop,
**characterized**
**in that** the rubber body (4) has a free circumferential surface and can be pressed into an unmachined spring eye (5), this circumferential surface bearing directly in the spring eye (5), and
**in that** the annular bearing surfaces (6) of the supporting rings (7) have at least one rubber-receiving space in the form of an indentation:

2. Elastic spring eye bearing according to Claim 1, **characterized in that** the rubber-receiving space is at least one annularly encircling rubber-receiving groove (9).

3. Elastic spring eye bearing according to Claim 1 or 2, **characterized in that** a radially further outward annular rubber-receiving groove (9) and a radially further inward rubber-supporting web (10). projecting annularly on the annular bearing surface (6) are provided.

4. Elastic spring eye bearing according to one of Claims 1 to 3, **characterized in that** indentations and/or rubber-receiving grooves (9) and/or rubber-supporting webs (10) are designed without any edges with rounded rubber bearing surfaces and rounded transitions.

5. Elastic spring eye bearing according to one of Claims 1 to 4, **characterized in that**, in the production state, the supporting rings (7) are placed loosely onto the inner metal part (3) and, in the completely fitted state, are fixed axially in place by means of lateral cheeks of a frame-side bearing block (8).

6. Elastic spring eye bearing according to one of Claims 1 to 4, **characterized in that** the supporting rings (7) are pressed onto the inner metal part (3) and are fixed in place axially as a result in such a manner that, in the production state, a distance remains from the end side (14) of the associated rubber body (4) as a clearance (16) which is dimensioned to be such a size that, in the pressed-in installation state, the clearance (16) is filled by the rubber bulge on the end side at least to such an extent that the rubber body (4) bears axially against the supporting rings (7) with only a slight prestress.

7. Elastic spring eye bearing according to one of Claims 1 to 6, **characterized in that** the supporting rings (7) are plastic rings.

8. Elastic spring eye bearing according to one of Claims 1 to 7, **characterized in that**, in the production state, the cylindrical rubber body (4) has an outside diameter which is larger than the inside diameter of the spring eye (5), with rubber-body end sides (14) which run radially and conically, and the inside diameter of the spring eye (5) is larger than the outside diameter of the supporting rings (7).

9. Elastic spring eye bearing according to Claim 8, **characterized in that** the rubber body (4) is divided into two subregions by an axially central, encircling rubber groove (15).

10. Elastic spring eye bearing according to one of Claims 1 to 9, **characterized in that** the inner metal part (3) is a metal pipe which can be clamped in a nonrotatable manner between cheeks of a frame-side bearing block (8) by means of a clamping screw (11) pushed through it, the supporting rings (7) ending flush with the end sides of the metal pipe.

## Revendications

1. Palier d'oeillet de ressort élastique, pour supporter un oeillet d'un ressort à lame sur un véhicule, composé d'une partie en métal-caoutchouc (2)
- avec une partie métallique (3) cylindrique, intérieure, susceptible d'être reliée à une partie cadre du véhicule,
- avec un corps en caoutchouc (4) de pourtour, répondant à une symétrie de rotation, rapporté par vulcanisation, en adhérant fermement, sur la partie métallique intérieure (3), comprenant des faces frontales (14) situées de part et d'autre, la partie métal-caoutchouc (2) étant susceptible d'être enfoncée dans l'oeillet de ressort (4) lors du montage, avec application d'une précontrainte dans le caoutchouc,
- avec des dépassements de pièces métalliques, par lesquels la partie métallique intérieure (3) dépasse des deux côtés du corps en caoutchouc (4),
- avec des bagues d'appui (7), enfilées des deux côtés sur les dépassements de pièces métalliques et fixées axialement, bagues d'appui qui, à l'état monté, enfoncé, pour offrir le soutien axial du corps en caoutchouc (4), appuient, par des faces d'appui annulaire (6), sur les faces frontales (14) chaque fois associées du corps en caoutchouc (4), l'oeillet de ressort (5) entourant, au moins partiellement, les bagues d'appui (7) par ses extrémités d'oeillet de ressort frontales, de manière que, entre la face intérieure des extrémités d'oeillets de ressort et la face périphérique extérieure des bagues d'appui (7), subsiste chaque fois un interstice annulaire de butée (13) de pourtour qui, lorsque la sollicitation radiale augmente, et/ou que la charge à la cardan augmente, lors de l'écrasement élastique, est surmonté, et au moins une extrémité d'oeillet de ressort, sur la bague d'appui (7) associée, devenant solidaire, sachant que la bague d'appui (7) agit en tant que butée radiale,
**caractérisé en ce que**
le corps en caoutchouc (4) présente une surface périphérique libre et est susceptible d'être enfoncé dans un oeillet de ressort (5) non usiné, cette surface périphérique étant en appui direct dans l'oeillet de ressort (5),
**en ce que** les surfaces d'appui annulaire (6) des bagues d'appui (7) présentent au moins un espace de logement pour caoutchouc, réalisé sous la forme de bosse rentrante.

2. Palier d'oeillet de ressort élastique selon la revendication 1, **caractérisé en ce que** l'espace de logement pour caoutchouc est au moins une gorge de logement pour caoutchouc (9), faisant le pourtour, en forme d'anneau.

3. Palier d'oeillet de ressort élastique selon la revendication 1 ou 2, **caractérisé en ce qu'**une gorge de logement pour caoutchouc (9) en forme d'anneau, radialement plus extérieurement, et une nervure d'appui de caoutchouc (10), en saillie en forme d'anneau, radialement plus intérieurement sur la face d'appui annulaire (6), sont prévues.

4. Palier d'oeillet de ressort élastique selon l'une des revendications 1 à 3, **caractérisé en ce que** des bosses rentrantes et/ou des gorges de logement pour caoutchouc (9) et/ou des nervures d'appui de caoutchouc (10) sont réalisées sans aucune arête vive, avec des faces d'appui pour caoutchouc arrondies et des transitions arrondies.

5. Palier d'oeillet de ressort élastique selon l'une des revendications 1 à 4, **caractérisé en ce que** les bagues d'appui (7), à l'état de sortie de fabrication, sont enfichées de façon lâche sur la partie métallique intérieure (3) et sont fixées axialement, à l'état de montage achevé, par un flasquage latéral d'un bloc de palier (8) situé côté cadre.

6. Palier d'oeillet de ressort élastique selon l'une des revendications 1 à 4, **caractérisé en ce que** les bagues d'appui (7) sont enfoncées sur la partie métallique intérieure (3) et, de ce fait, fixées axialement, de manière que, à l'état de sortie de fabrication, il reste, par rapport à la face frontale du corps en caoutchouc (4) associé, un espacement servant d'espace libre (16), de dimension telle que, à l'état monté enfoncé, l'espace libre (16) est rempli par le bombement côté frontal du caoutchouc, à un degré tel que le corps en caoutchouc (4) est en appui axialement sur les bagues d'appui (7), uniquement avec une faible précontrainte.

7. Palier d'oeillet de ressort élastique selon l'une des revendications 1 à 6, **caractérisé en ce que** les bagues d'appui (7), sont des bagues en matière synthétique.

8. Palier d'oeillet de ressort élastique selon l'une des revendications 1 à 7, **caractérisé en ce que**, à l'état de sortie de fabrication, le corps en caoutchouc (4) cylindrique présente un diamètre extérieur supérieur au diamètre intérieur de l'oeillet de ressort (5), avec des faces frontales (14) du corps en caoutchouc s'étendant de façon radialement conique, et le diamètre intérieur de l'oeillet de ressort (5) est supérieur au diamètre extérieur des bagues d'appui (7).

9. Palier d'oeillet de ressort élastique selon la revendication 8, **caractérisé en ce que** le corps en caoutchouc (4) est divisé en deux zones partielles, par une gorge en caoutchouc (15) de pourtour, axialement centrale.

10. Palier d'oeillet de ressort élastique selon l'une des revendications 1 à 9, **caractérisé en ce que** la partie métallique intérieure (3) est un tube métallique, susceptible d'être enserré, de façon immobilisée en rotation, entre des joues d'un bloc palier (8) situé côté cadre, ceci au moyen d'une vis de serrage (11) ayant été passée dans le tube métallique, les bagues d'appui (7) s'achevant de façon affleurée vis-à-vis des faces frontales du tube métallique.
